# EUROPEAN PATENT SPECIFICATION

(11) **EP 3 596 801 B1**
(45) Date of publication and mention of the grant of the patent: **09.06.2021**
(21) Application number: 18731840.7
(22) Date of filing: 18.06.2018
(51) Int. Cl.: H02J 9/06, H02J 7/00, H02J 7/02, H02M 7/44

(54) **EMERGENCY CONVERTER OUTPUT SWITCHING**
NOTUMSETZER-AUSGANGSSCHALTUNG
COMMUTATION DE SORTIE DE CONVERTISSEUR D'URGENCE

(30) Priority: 19.06.2017 GB 201710199
(43) Date of publication of application: 22.01.2020
(73) Proprietor: Tridonic GmbH & Co KG, 6851 Dornbirn (AT)
(72) Inventor: KELLY, Jamie, North Shields Tyne & Wear NE29 8AH (GB)
(74) Representative: Beder, Jens
(86) International application number: PCT/EP2018/066082
(87) International publication number: WO 2018/234226

(56) References cited:
- EP-A2- 2 020 726
- WO-A1-2016/120769
- DE-A1- 3 409 358
- US-A- 5 856 712
- US-A1- 2002 140 403
- US-A1- 2015 008 844
- US-B2- 9 356 323

## Description

The invention is in the field of converters for driving a load from either mains supply or a battery. In particular, the invention proposes an emergency converter for driving (an) LED in an emergency light and a method for switching between either mains supply or battery-driven operation.

A known emergency converter, arranged to operate one or more lighting devices, for example light emitting diodes (LEDs), operates in combination with a standard converter to add an emergency capability. The emergency converter monitors the mains supply voltage supplied by the external mains supply which is used to generate a load voltage and/or load current for driving the lighting device. The emergency converter uses a switch, for example a relay, that switches the lighting device from being driven by the standard converter using electric energy from mains supply to being driven by the emergency converter using energy drawn from an energy storage device in case of determining a failure of mains power supply. Such emergency case occurs for example, when the mains supply voltage and/or mains supply current is unavailable. In the emergency mode of operation, the emergency converter uses energy drawn from an energy storage device such as a battery and provides the electric energy, obtained from the energy storage device to the lighting device.

The emergency converter usually also includes charging means for generating a charging current for charging the energy storage device with electric energy drawn from mains supply.

A standard converter for driving the lighting device from mains supply (Standard operation mode) and a separate emergency converter for driving the lighting device in a battery-backed operation mode in case mains supply fails (emergency operation mode) are used for providing electric energy to the lighting device. The emergency converter usually also includes means for charging the battery from mains supply in the standard operation mode. This task requires a further converter circuit, for example a flyback converter with additional control circuits an low voltage power supply for each converter.

A particular cost and space effective solution for integrating the standard converter and the emergency converter uses a switched mode power supply, for example a flyback converter with a transformer. The transformer simultaneously provides an isolation barrier between high voltages on a (primary) mains supply side and low voltages on a (secondary) low voltage side, for example safety extra low voltage (SELV) towards the lighting device and as well as the battery. A single transformer may be used for providing isolation barriers, one isolation barrier between mains supply side and battery and a further isolation barrier between battery and the lighting device in order to comply with spatial and cost requirements as well as the requirements for electric safety.

However, when choosing this cost saving approach of using a single transformer for both isolation barriers, that in a case of charging the battery from mains supply, an undesired lighting of the lighting device may occur. This undesired lighting originates from induced voltages in the multiple secondary winding of the single transformer, in particular during the standard operation mode a charging current over the secondary winding forming part of a charging circuitry for the battery also induces a voltage in the secondary winding forming part of the converter circuitry for driving the lighting device. Documents US5856712 and US2002140403 are two examples of the prior art.

In view of the disadvantages and problems of the prior art, the technical problem of providing a converter device which simultaneously operates in a reliant manner and has advantageous manufacturing costs requires solution.

The converter device according to independent claim 1 and the corresponding method (claim 6) of operating the converter device solves the technical problem. The dependent claims define further advantageous embodiments of the invention. The invention is set out in the appended set of claims.

A converter device for driving a load according to an aspect of the invention comprises a converter circuit including a transformer and a battery charging circuit for providing a charging current to an energy storage device. The transformer is configured to provide an isolation barrier between a mains supply and the energy storage device and a further isolation barrier between the energy storage device and the load. The converter device is configured to provide the charging current with a first frequency and to provide a load current with a second frequency different from the first frequency.

The invention proposes to use, in a converter device which provides load current to one or more lighting devices, particularly LEDs, a single transformer for both a charging circuit, which charges an energy storage device, in particular a rechargeable battery, and a converter circuit, which provides electrical energy to one or more lighting devices. The electrical energy is supplied by an external electrical energy source, in particular mains supply in a standard operation mode (normal operation mode, mains operation mode), when the converter device is providing a charging current to the energy storage device. A transformer is a part of the converter circuit, arranged to convert electrical energy from one voltage level to another. For example, the transformer is a part of a flyback converter when the converter device uses a flyback converter topology.

Thus, according to an aspect of the present invention, providing the load current to the lighting device with a second frequency and the charging current with a first frequency enables to discriminate between the standard (mains) mode of operation and the emergency battery-backed mode of operation. Therefore, additional measures can now be taken using the different operation frequencies in order to avoid any undesired lighting of the lighting devices due to unwanted induction of a current as load current although only a single transformer is used in the emergency converter.

The first frequency of the charging current and the second frequency of the load current each may refer to a frequency (operation frequency) of current pulses of pulse width modulated current signal.

The converter device comprises a switch configured to disconnect the load from the transformer.

The switch, for example a relay or preferably a transistor, enables to disconnect an output to the load from a secondary winding of the transformer and prevent any undesired load current leading to an undesired lighting of the lighting device in case of the lighting device being intended to be driven solely by the standard (mains) converter.

The converter device according to the invention comprises a switch control circuit configured to provide a drive signal to the switch for the switch disconnecting the load from the transformer in a battery-charging phase.

The battery charging phase corresponds to a time, during which the standard converter provides the load current for driving the load. Any unwanted load voltage being induced via the transformer of the emergency converter and originating from the charging current for charging the battery is accordingly suppressed by disconnecting the load from the emergency converter.

A further embodiment includes a converter device wherein the switch control circuit is configured to determine a frequency of a charging current, and to provide the drive signal to the switch for disconnecting the load from the transformer when the determined frequency corresponds to the first frequency.

Using the charging current, respective an induced voltage from the charging current and the information derived from determining the first frequency as criterion for disconnecting the switch in a standard operation mode enables to avoid any undesired lighting or glimming of the lighting device on one hand and additionally, to use electric energy from the induced voltage due to the charging current for driving the switch. As an additional benefit a dedicated low voltage supply for driving the switch is not required.

The switch control circuit using a determination of a frequency of a current signal for controlling the switch enables a simple but effective manner to provide a switch control signal without need for further complex evaluation. Moreover, as electric power resp. a voltage is provided at the output of the secondary winding of the transformer either in case of the standard mode during battery charging as well as in the emergency mode of operation, a wide range of switching elements such as depletion mode MOSFETs is usable for an implementation.

A converter device according to an embodiment comprises the switch control circuit configured to provide a further drive signal to the switch for the switch connecting the load to the transformer in a battery-backed load operation phase.

In a converter device according to another embodiment the switch control circuit is configured to provide the further drive signal to the switch when the second frequency is determined.

An embodiment of the converter device is characterized in that that the second frequency is higher than the first frequency.

When using a higher second frequency for driving the load, an increased energy transfer to the load in an emergency operation mode is achieved than the energy transfer into the battery for maintaining a predefined battery charging level during the standard operation mode.

According to a further aspect, the technical problem is solved by a method for controlling a converter device for driving a load. The converter device comprises a converter circuit, which includes a transformer and a battery charging circuit for providing a charging current to an energy storage device. The transformer provides an isolation barrier between a mains supply and the energy storage device and a further isolation barrier between the energy storage device and the load. The method includes steps of the converter device providing the charging current with a first frequency, and of providing, by the converter device, a load current with a second frequency different from the first frequency.

The method for controlling a converter device includes the converter device comprising a switch configured to disconnect the load from the transformer and a switch control circuit providing a drive signal to the switch for the switch disconnecting the load from the transformer in a battery charging phase.

An embodiment of the method for controlling a converter device includes the switch control circuit determining a frequency of a charging current, and providing the drive signal to the switch for disconnecting the load from the transformer when the first frequency is determined.

The method for controlling a converter device according to a further embodiment is characterized by the switch control circuit providing a further drive signal to the switch for the switch connecting the load to the transformer in a battery-backed load operation phase.

According to a further embodiment, the method for controlling a converter device comprises the switch control circuit providing the further drive signal to the switch when a second frequency is determined.

In the method for controlling a converter device according to one embodiment the second frequency is higher than the first frequency.

Embodiments of the invention are discussed with reference to the enclosed drawings, in which
- Fig. 1: shows a general overview of an emergency converter according to an embodiment,
- Fig. 2: shows an example of an emergency converter device and a standard mains converter arranged in an emergency lighting application,
- Fig. 3: provides a circuit diagram of portions of an emergency converter device implementing an embodiment, and
- Fig. 4: is a simplified flowchart showing method steps for executing the method for controlling a converter device according to an embodiment.

In the figures same reference signs denote same or corresponding elements. The repetitive discussion of same reference sings in different figures is omitted for sake of conciseness.

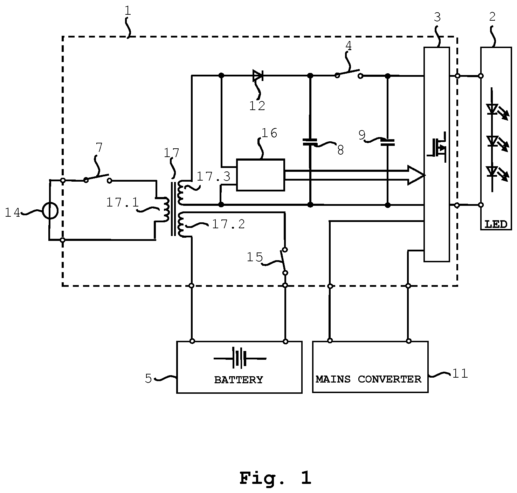

Fig. 1 shows a general overview of an emergency converter device 1 as converter device according to an embodiment.

The converter device 1 comprises a transformer 17, a charging circuit 7, 17.1, 17.2., 15 for charging an energy storage device 5 and a converter circuit 15, 17.2, 17.3, 12, 3, 4, 8, 9 for driving a lighting device 2. The converter device 1 comprises output terminals that are connectable to at least one lighting device 2 for providing electrical energy, in particular providing a load voltage U_{LED} for driving a load current I_{LED} to the lighting device 2.

The converter device 1 can be directly or indirectly connected to the lighting device 2. In case of a direct connection, no further components are present between the converter device 12 and the lighting device 2. In case of an indirect connection, further components are present between the operating apparatus 1 and the lighting device 2. Instead of a single lighting device 2, plural lighting devices may be connected to and driven by the emergency converter device 1.

The converter device 1 is connected to an external electrical energy source 14, for example mains supply providing an AC voltage. Not shown in fig. 1 are elements as an EMI circuit (electromagnetic interference), a RFI circuit (radiated frequency interference) and most notably a rectifier circuit, which provides a DC voltage and a DC current at the input terminals of the converter device 1 from the AC voltage provided by the mains supply.

The converter device 1 obtains, during the standard operation mode electric energy from the external energy source 14 and provides the obtained electrical energy to the energy storage device 5. A standard converter 11 provides a voltage and a current for driving the lighting device 2 during the standard operation mode.

The converter device 1 comprises a transformer 17. The transformer 17 provides the electrical energy obtained from the external energy source 14 to the energy storage device 5. The transformer 17 comprises a primary side with primary winding 17.1 and a secondary side with secondary windings 17.2, 17.3. The primary side and the secondary side are galvanically isolated. The electrical energy obtained from the external energy source 14 is transferred from the primary side to the secondary side of the transformer 17 for charging the energy storage device 5.

An isolation barrier exists between the primary side of the transformer 17 and the secondary side of the transformer 17. A further isolation barrier is provided, according to the present embodiment, in that the secondary side of the transformer 17 comprises at least two secondary windings 17.2, 17.3. A charging circuit and a converter circuit each are connected with different secondary windings 17.2, 17.3. According to the embodiment of fig. 1, the charging circuit is connected with a first secondary winding 17.2, and the converter circuit is connected with a second secondary winding 17.3. The arrangement of the converter device 1 of fig. 1 provides the further isolation barrier between the energy storage device 5 and the lighting device 2. Thus, the energy storage device 5 and the lighting device 2 are galvanically isolated from each other.

Electric energy is transferred from the primary side 17.1 via primary winding 17.1 and stored in the transformer 17, in particular in a magnetic field of the transformer 17. Then, the energy, stored in the magnetic field, is supplied to the secondary side via secondary winding 17.2 of the transformer 17, in the charging mode.

According to the present embodiment, the converter device 1 acts as a flyback converter, and the transformer 17 corresponds to a transformer of the flyback converter 1. The operation of the flyback converter is well known.

As shown in fig. 1, the converter device 1 respectively comprises on its primary side a switch 7. When the switch 7 is closed (ON-state), and electrically conducting, the primary side of the transformer 14 is connected to the external energy source 11. Electric energy is supplied from the external energy source 11 to the transformer 14 and stored by the primary winding 17.1 in an increasing magnetic flux in the magnetic field in the transformer 17.

The above described ON- and OFF-phases of the switch 7 of the primary side of the converter device 1 are repeated alternately. The switching of the switch 7 can be controlled by a controller integrated circuit, such as an ASIC or microcontroller not shown in Fig. 1.

The charging circuit includes a charging switch 15 which may be formed by a MOSFET, possibly with an integrated body diode, or a bipolar transistor or an isolated gate bipolar transistor (IGBT). An anti-parallel diode can be arranged in parallel to the charger switch 15.

An electric current induced in the secondary winding 17.2 is negative, so the controlled charging switch 15 is open, in particular in an OFF-state and non-conducting. Thus, no current flows through the secondary side of the transformer 17 and accordingly no electric energy is transferred to the secondary side of the converter device 1.

When the controlled switch 7 on the primary side of the converter device 1 and the transformer 17 is open, in particular is in an OFF-state and not-conducting, a transfer of electric energy from the external energy source 11 into the magnetic field of the transformer 17 is stopped. The magnetic flux driven via the primary winding 17.1 of the transformer 17 decreases. A current induced in the secondary winding 17.2 on the secondary side of the transformer becomes positive. The controlled switch 15 is closed, in an ON-state and not-conducting. Electric energy can flow from the transformer 17 towards the energy storage device 5.

According to the present embodiment, the charger switch 15 is arranged to switch on or off the transfer of the electrical energy obtained by the second winding 17.2 to the charging circuit.

If the charger switch 15 is closed (ON-state) and is electrically conducting, electrical energy supplied via the transformer 17 is supplied to the energy storage device 5. Thus, the energy storage device 5 is charged and stores electric energy.

If the charger switch 15 is open (OFF-state) and is electrically not conducting, no electric energy is supplied to the energy storage device 5 and no charging of the energy storage device 5 is performed.

If the charger switch 15 is open and if electrical energy, supplied via the transformer 17 from the external energy source 14, is transferred through the secondary side of the converter device 1 respectively, the charger is deactivated but the lighting device driver circuit is activated. Thus, the electrical energy, supplied via the transformer 17, is used to operate, i.e. to provide energy to the lighting device 1 as described above.

The switching of the charger switch 15 can be done by a suitable controller circuit. The switching of the charger switch 15 can for example be performed based on a determined charging level of the energy storage device 5 during standard operation mode.

The converter device 1 shown in fig. 1 comprises on the secondary side of the transformer 17 the charging circuit. The charging circuit according to the embodiment comprises at least the charging switch 15 and furthermore connects electrically an electrical energy storage device 5 such as a battery, in particular a rechargeable battery. The charging circuit is adapted to provide a charging current to the energy storage device 5 for transferring electric energy from the primary side to the secondary side via secondary winding 17.2 of the transformer 17 and further to the energy storage device 5.

In the emergency operation mode (emergency operation phase), electric energy from the energy storage device 5 is used to generate the load voltage ULED and the load current ILED via the transformer 17 with secondary winding 17.2 now acting as a primary side, secondary winding 17.3 acting as secondary side of the transformer 17. The transformer 17 now acts as a flyback transformer for the converter circuit for driving the lighting device 2 from electric energy stored in the energy storage device 5.

As is apparent, the converter device 1 respectively comprises a lighting device driver in form of the converter circuit arranged on the secondary side with the secondary winding 17.3 of the transformer 17. The circuit is configured to provide the lighting device 2 with electric energy, particularly a load current and a load voltage, transferred from the energy storage device 2 via the secondary winding 17.2 to the secondary winding 17.3 of the transformer 17. The converter circuit provides electric energy to the lighting device 2. The converter circuit of the present embodiment comprises at least the diode 12, the main capacitor 8, the capacitor 9 and the switch 4. Further circuit elements may also be arranged on the secondary side of the converter device 1.

Electric energy is now stored in a main capacitor 8 arranged at the secondary side of the converter device 1. The electric energy, stored in an electric field of the main capacitor 8 is provided to the lighting device 2 when a switch 4 is closed.

Thus, both the charging circuit and the converter circuit are connected to a respective secondary side via respective secondary windings 17.2, 17.3 of the transformer 17. The electrical energy transferred from the primary side 17.1 to the secondary side 17.2, 17.3 of the transformer 17 is selectively and/or alternately provided to the charging circuit or to the lighting device driver circuit.

According to the arrangement of the converter device 1, when the charging circuit is active, the charger switch 15 is closed and the energy storage device 5 is charged, a significant voltage is induced in secondary windings 17.3 of the transformer 17.

The switch 4 isolates this voltage from the main capacitor 9, and acts accordingly as a main capacitor isolating switch. Thus, the main capacitor isolating switch 4 is open, in particular is in and OFF-state and not-conducting, when charging of the energy storage device 5 is performed.

The lighting device 2 is supplied with a load current and a load voltage stored in the main capacitor 9, and interference of the energy supply to the lighting device 2 may occur by the charging circuit.

The converter device 1 has a simplified arrangement that is nevertheless effective. Further, no additional components such as further converters circuits are required, because the transformer 17 can be used for both supplying energy to the lighting device 2 and charging the energy storage device 5.

The converter device 1 operates in two modes: in a standard operation mode and an emergency operation mode.

In the standard operation mode, the converter device 1 provides electric energy provided from the external energy supply device 14 to the energy storage device 5. The electric energy is supplied via the charging circuit. The operation frequency of the converter device 1 in the standard operation mode is a first frequency f₁.

In the emergency operation mode, the converter device 1 provides electric energy stored in the energy storage device 5 to the lighting device 2. The operation frequency of the converter device 1 in the emergency operation mode is a second frequency f₂.

The operation frequency of the respective mode is determined by control circuits, for example control integrated circuits such as ASICs or microcontrollers for controlling the switches 7, 15 and 4.

A switch control circuit 16, preferably arranged on the secondary side of the transformer 17 in the converter circuit portion is adapted to generate a switch control signal based on an operation frequency on the secondary side of the transformer 17, in particular on the secondary side of the transformer 17 defined by including the secondary winding 17.3.

If the switch control circuit 16 determines an induced voltage in the secondary winding has an operating frequency corresponding to a frequency value of f₁ and/or an operating frequency in a range around the frequency f₁ and/or a frequency different from the operating frequency f₂, the switch control circuit 16 determines the standard operation mode and/or a charging phase for charging the energy storage device 5 to be present. The switch control circuit 16 then generates a first switch control signal in order to switch the switch 3 into a disconnecting state. In the disconnected state of the switch 3, the transformer 17, in particular the secondary winding 17.3 of the transformer is isolated from the lighting device 2.

If the switch control circuit 16 determines an induced voltage in the secondary winding has an operating frequency corresponding to a frequency value of f₂ and/or an operating frequency in a range around the frequency f₂ and/or a frequency different from the operating frequency f₁, the switch control circuit 16 determines the emergency operation mode. The switch control circuit 16 then generates a second switch control signal in order to switch the switch 3 into a connecting state. In the connected state of the switch 3, the transformer 17, in particular the secondary winding 17.3 of the transformer is electrically connected to the lighting device 2. The converter circuit of the converter device 1 provides a load current ILED to the lighting device 2.

Usually, the converter device 1 operates in the standard operation mode. The converter device 1 switches to operating in the emergency operating mode in case of a malfunction, a break and/or termination of the electrical energy supply from the external energy source 14. The converter device 1 switches back to operating in the standard operation mode if the energy supply from the external energy source 14 has been restored, for example the energy supply from the external energy source 14 functions as required.

The converter device 1 of the embodiment allows a reduction of a number of components although being capable of operating in the standard operation mode from the external energy source 11 and the emergency operation mode from the energy storage device 5. The converter device 1 can be manufactured in a cost-effective manner due to reducing the number of components and complexity of the converter device 1. Additionally, the converter device 1 may be designed in a reduced size in comparison to most of known emergency converter devices.

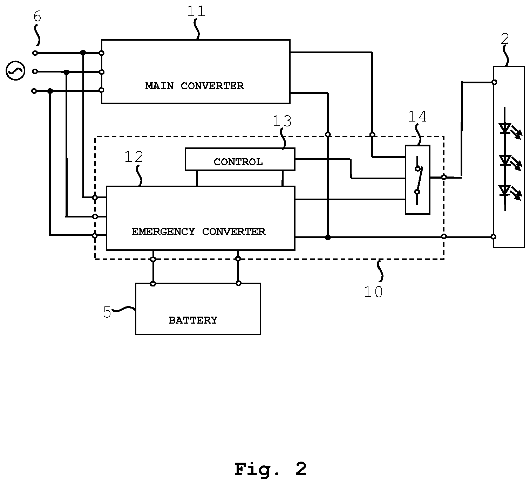

Fig. 2 shows an example of a converter device in an emergency application. A converter device 11 (standard mains converter device) is connected to a mains supply 6 and draws electric energy therefrom. The converter device 11 converts the AC voltage from the mains supply 6 to a DC voltage suitable for driving at least one lighting device 2. The lighting device 2 may include one or more gas discharge lamps or light emitting diodes (LED).

In order to provide the lighting device 2 with electric energy in case of mains supply failure, an emergency converter device 10 is co-arranged with the converter device 11. The emergency converter device 10 as shown in fig. 2 is also provided with electric energy from mains supply 6. The emergency converter device 10 comprises a charging circuit, for example included in an emergency converter circuit 12, for generating a DC voltage and providing a charging current for charging an energy storage device 5, preferably a rechargeable battery. The energy storage device 5 is adapted to provide a predetermined minimum amount of electric energy over a minimum time period in case of the mains supply failure. The mains supply failure is detected by a control unit 13 of the emergency converter device 10 which monitors the state of mains supply 6 at a mains input of the converter device 10. The emergency converter device 10 further comprises a switch 14, which is controlled by the control unit 13.

In the standard mode of operation, when mains supply is found to operate normally, for example a mains supply voltage has a voltage value within admissible voltage ranges, the control unit 13 controls the switch 14 to connect an input receiving the DC output voltage of the converter device 11 to an output of the switch 14, which is directly or indirectly connected to the lighting device 2. Therefore, in a standard mode of operation, the converter device 11 drives the lighting device 2 as a load from mains supply 6.

In case that the control unit 13 determines that mains supply fails, for example the mains supply voltage has a voltage value outside admissible voltage ranges, or even misses entirely, the control unit 13 controls the switch 14 to disconnect an input receiving the DC output voltage of the standard converter device 11 and to connect a further input of the switch 14 to the output of the switch 14. The further input is connected to the output of an emergency converter circuit 12 and receives a load current generated by the emergency converter 10 from energy drawn from the energy storage device 5. Therefore, in an emergency mode of operation, the lighting device 2 is driven by the emergency converter circuit 12 from the energy storage device 5.

The block diagram shown in fig. 2 provides an overview over a characteristic emergency lighting application, which includes an emergency converter 10 as known from prior art. However, replacing the emergency converter 10 with the converter device 1 according to an embodiment is possible and advantageous, as the functions of the switch 14 and control unit 13 are then integrated in the converter device 1.

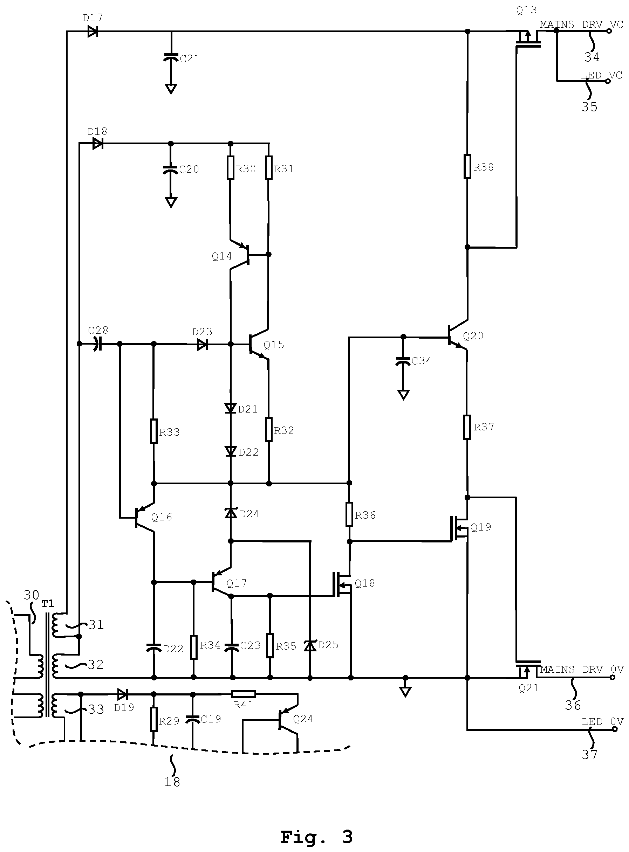

Fig. 3 provides a circuit diagram depicting a part of an emergency converter 1 according to an embodiment. The depicted part shows in particular a transformer T1, which has secondary windings 31, 32, 33. The primary winding 30 of the transformer T1 can form part of electric circuitry for receiving an input mains supply AC voltage, filtering and rectifying the mains supply AC voltage to form a suitable voltage waveform for driving the lighting device 2. The electric circuitry connected the primary winding 30 of the transformer T1 may include known circuit elements arranged on the primary side of a flyback converter circuit.

The secondary winding 33 of the transformer T1 can connect a battery charging circuit 18, whose circuit elements are only partially shown at the bottom part of fig. 3, in particular Diode D19, resistors R29, R41, capacitor C19 and bipolar transistor switch Q24. The battery charging circuit 18 generates a DC voltage and a charging current for charging the energy storage device 5 and maintaining the energy storage device 5 at a predetermined charging level.

The transformer T1 ensures that an isolation barrier is provided between the energy storage device 5, the charging circuit 18 on the one hand and the lighting device 2 on the other hand. The lighting device 2 and the energy storage device 5 are electrically isolated from each other. The isolation barrier is provided by the transformer T1 comprising plural secondary windings 31, 32, 33 and connecting the secondary load driving portion of the converter device 1 to the secondary winding 32, 33 on the one hand and connecting the charging circuit 18 of the converter device 12 to the another secondary winding 33.

According to the inventive approach, the converter device 2 provides power the secondary winding 31, 32 with a first operating frequency f1 in case the emergency converter device 2 is not driving the lighting device 2. In this standard mode of operation, the standard converter 11 drives the lighting device 2 using electric energy drawn from mains supply 6.

In case the emergency converter device 1 is driving the lighting device 2 in an emergency mode of operation, the converter device 1 provides power at the secondary winding 31, 32 with a second operating frequency f2. In this emergency mode of operation, the converter device 2 drives the lighting device 2 from electric energy drawn from the energy storage device 5 and provided from the energy storage device 5 via the transformer T1, in particular via winding 33 and windings 31, 32.

Accordingly electric energy is always provided at the output 35 of the converter device 2 to the lighting device 2, either from mains supply 6 by the standard converter 11 via the input 34 in the standard mode of operation, or by the converter device 1 from the energy storage device 5 via the switch 24. The switch 24 may be a transistor, particularly a P-channel MOSFET, Q13 as shown in fig. 3. Q13 isolates the battery charging circuit 18 and the energy storage device 5 from the lighting device 2 when the standard converter 11 is driving the lighting device 2. Therefore, unintended light emission by the lighting device 2 is effectively suppressed by the transistor Q13.

Q13 can be P-channel-MOSFET, its current capacity being significantly smaller than a current capacity of an N-channel MOSFET, as used as transistor switch Q21 in the circuit in fig. 3. The transistor Q21 switches power from the standard converter 11 to a second LED output 37 connecting the lighting device 2. Generally, N-channel FETs have superior capabilities at lower cost than the equivalent P-channel FET.

The circuitry in fig. 3 provides an analogue implementation for generating a switch drive signal for the switch 24 which ensures that the switch 24, in particular the transistor Q13, conducts between drain and source in an ON-state, while the transistor Q21 is simultaneously in an OFF state, in particular the drain-source range is in a blocked (disconnected) state, in particular electrically not conducting.

In fig. 3, the transistors Q13, Q21 are switched by the switch control circuit 13 determining the gate potential applied to the transistors Q13, Q21 based on the first frequency f1 or the second frequency f2 of the pulse width modulated voltage induced in the secondary windings 31, 32 of the transformer T1.

The analogue implementation shown in fig. 3 may be dimensioned for example for the first frequency f1 being smaller than the second frequency f2. In a preferred embodiment, the first frequency f1 may be in a frequency range around 20 to 30 kHz, in particular between 20 and 30 kHz. In the preferred embodiment, the second frequency f2 in case the emergency converter 1 is driving the lighting device 2 may be in a frequency range above 60 kHz.

The proposed converter device 1 accordingly provides electric power to an isolated load without requiring a separate isolated power supply is accordingly advantageous, both in its isolation characteristics and the involved costs. This is particularly advantageous for cost sensitive products such as emergency converters intended for a mass market and manufactured in large quantities.

The proposed solution is also particularly advantageous for a lighting device 2 using LEDs which require DC power, which can be advantageously switched via semiconductor devices. The present embodiment further uses power provided by the converter device 1 in order to switch the transistor Q21 in a conducting state in case of the standard mode of operation. A separate isolated power supply is accordingly not required.

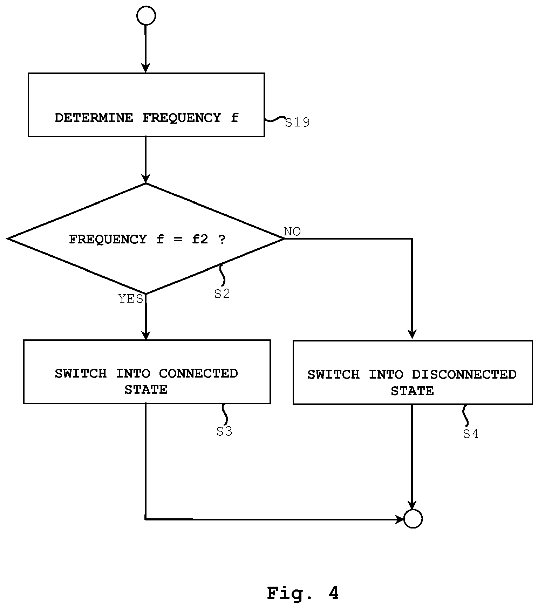

Fig. 4 shows a simplified flowchart with method steps for executing the method for controlling a converter device 12 according to an embodiment. The steps S1 to S4 in fig. provide a functional description of the effects of the switch control circuit 13 and the states of the switch 24 according to an embodiment.

In step S1 a frequency of the an induced voltage in the secondary windings 31, 32 of the transformer T1 is determined. In step S2, the determined frequency is compared with a predetermined second frequency f2.

In the step S2 it may also be determined if the determined frequency exceeds a threshold frequency f_{C}. This is particularly advantageous, if the second frequency f2 is larger than the first frequency f1.

If step S2 determines that the determined frequency f is equal to the second frequency f2, the method proceeds to step S3 and the switch 3, for example the transistor Q13, is switched into a connecting state (ON state). The converter device 12 now provides a load current to the lighting device 12, the electric energy to drive the load current being drawn from the energy storage device 5.

If step S2 determines that the determined frequency f is different to the second frequency f2, the method proceeds to step S4. In subsequent step S4 the switch 24, for example the transistor Q13, is switched into a disconnecting state (OFF state). The standard converter device 11 provides a load current to the lighting device 2 via the input 34 of the converter device 10 and the LED output 35 of the converter device 10, the electric energy to drive the load current being drawn from the mains supply 6.

## Claims

1. Converter device for driving a load (2), the converter device comprising
a converter circuit including a transformer (17),
a battery charging circuit configured for providing a charging current to an energy storage device (5), and
a switch (3) configured to disconnect the load (2) from the transformer (17),
wherein the transformer (17) is configured to provide an isolation barrier between a mains supply (6) and the energy storage device (5) and a further isolation barrier between the energy storage device (5) and the load (2), and
**characterized in**
**that** the converter device is configured to provide the charging current with a first frequency, and to provide a load current with a second frequency different from the first frequency, and
**that** the converter device comprises a switch control circuit (16) configured to provide a drive signal to the switch (3) for the switch (3) disconnecting the load (2) from the transformer (17) in a battery charging phase.

2. Converter device according to claim 1,
**characterized in**
**that** the switch control circuit (12) is configured to determine a frequency of a charging current, and to provide the drive signal to the switch (7) for disconnecting the load (2) from the transformer (3) when the first frequency is determined.

3. Converter device according to one of claims 1 and 2,
**characterized in**
**that** the switch control circuit (16) is configured to provide a further drive signal to the switch (3) for the switch (3) connecting the load (2) to the transformer (17) in a battery-backed load operation phase.

4. Converter device according to claim 3,
**characterized in**
**that** the switch control circuit (16) is configured to provide the further drive signal to the switch (3) when the second frequency is determined.

5. Converter device according to one of claims 1 to 4,
**characterized in**
**that** the second frequency is higher than the first frequency.

6. Method for controlling a converter device (1) for driving a load (2),
the converter device comprising a converter circuit including a transformer (17), a battery charging circuit for providing a charging current to an energy storage device (5), a switch (3) configured to disconnect the load (2) from the transformer (17) and a switch control circuit (16), wherein the transformer (17) provides an isolation barrier between a mains supply (6) and the energy storage device (5) and a further isolation barrier between the energy storage device (5) and the load (2), and the method is
**characterized in**
providing, by the converter device, the charging current with a first frequency,
providing, by the converter device, a load current with a second frequency different from the first frequency, and
providing, by the switch control circuit (16), a drive signal to the switch (3) for the switch (3) disconnecting the load (2) from the transformer (17) in a battery charging phase.

7. Method for controlling a converter device (1) according to claim 6,
**characterized in**
the switch control circuit (16) determining a frequency of a charging current, and providing the drive signal to the switch (3) for disconnecting the load (2) from the transformer (17) when the first frequency is determined.

8. Method for controlling a converter device (1) according to claim 6 or 7,
**characterized in**
the switch control circuit (16) providing a further drive signal to the switch (3) for the switch (7) connecting the load (2) to the transformer (17) in a battery-backed load operation phase.

9. Method for controlling a converter device (1) according to claim 8,
**characterized in**
the switch control circuit (16) providing the further drive signal to the switch (7) when a second frequency is determined.

10. Method for controlling a converter device (1) according to one of claims 6 to 9,
**characterized in**
**that** the second frequency is higher than the first frequency.

## Patentansprüche

1. Wandlervorrichtung zum Ansteuern einer Last (2), wobei die Wandlervorrichtung Folgendes umfasst:
eine Wandlerschaltung, die einen Transformator (17) einschließt,
eine Batterieladeschaltung, die zum Bereitstellen eines Ladestroms an eine Energiespeichervorrichtung (5) konfiguriert ist, und
einen Schalter (3), der dazu konfiguriert ist, die Last (2) von dem Transformator (17) zu trennen,
wobei der Transformator (17) dazu konfiguriert ist, eine Trennstrecke zwischen einer Netzversorgung (6) und der Energiespeichervorrichtung (5) und eine weitere Trennstrecke zwischen der Energiespeichervorrichtung (5) und der Last (2) bereitzustellen, und
**dadurch gekennzeichnet,**
**dass** die Wandlervorrichtung dazu konfiguriert ist, den Ladestrom mit einer ersten Frequenz bereitzustellen und einen Laststrom mit einer zweiten Frequenz bereitzustellen, die sich von der ersten Frequenz unterscheidet, und
**dass** die Wandlervorrichtung eine Schaltersteuerschaltung (16) umfasst, die dazu konfiguriert ist, dem Schalter (3) ein Ansteuersignal bereitzustellen, damit der Schalter (3) die Last (2) in einer Batterieladephase von dem Transformator (17) trennt.

2. Wandlervorrichtung nach Anspruch 1,
**dadurch gekennzeichnet,**
**dass** die Schaltersteuerschaltung (12) dazu konfiguriert ist, eine Frequenz eines Ladestroms zu bestimmen und dem Schalter (7) das Ansteuersignal zum Trennen der Last (2) von dem Transformator (3) bereitzustellen, wenn die erste Frequenz bestimmt ist.

3. Wandlervorrichtung nach einem der Ansprüche 1 bis 2, **dadurch gekennzeichnet,**
**dass** die Schaltersteuerschaltung (16) dazu konfiguriert ist, dem Schalter (3) ein weiteres Ansteuersignal bereitzustellen, damit der Schalter (3) die Last (2) in einer batteriegestützten Lastbetriebsphase mit dem Transformator (17) verbindet.

4. Wandlervorrichtung nach Anspruch 3,
**dadurch gekennzeichnet,**
**dass** die Schaltersteuerschaltung (16) dazu konfiguriert ist, dem Schalter (3) das weitere Ansteuersignal bereitzustellen, wenn die zweite Frequenz bestimmt ist.

5. Wandlervorrichtung nach einem der Ansprüche 1 bis 4,
**dadurch gekennzeichnet,**
**dass** die zweite Frequenz höher als die erste Frequenz ist.

6. Verfahren zum Steuern einer Wandlervorrichtung (1) zum Ansteuern einer Last (2),
wobei die Wandlervorrichtung eine Wandlerschaltung umfasst, die einen Transformator (17), eine Batterieladeschaltung zum Bereitstellen eines Ladestroms an eine Energiespeichervorrichtung (5), einen Schalter (3), der dazu konfiguriert ist, die Last (2) von dem Transformator (17) zu trennen, und eine Schaltersteuerschaltung (16) einschließt, wobei der Transformator (17) eine Trennstrecke zwischen einer Netzversorgung (6) und der Energiespeichervorrichtung (5) und eine weitere Trennstrecke zwischen der Energiespeichervorrichtung (5) und der Last (2) bereitstellt, und das Verfahren
**gekennzeichnet ist durch**
Bereitstellen, **durch** die Wandlervorrichtung, des Ladestroms mit einer ersten Frequenz,
Bereitstellen, **durch** die Wandlervorrichtung, eines Laststroms mit einer zweiten Frequenz, die sich von der ersten Frequenz unterscheidet, und
Bereitstellen, **durch** die Schaltersteuerschaltung (16), eines Ansteuersignals an den Schalter (3) dafür, dass der Schalter (3) die Last (2) in einer Batterieladephase von dem Transformator (17) trennt.

7. Verfahren zum Steuern einer Wandlervorrichtung (1) nach Anspruch 6,
**dadurch gekennzeichnet,**
**dass** die Schaltersteuerschaltung (16) eine Frequenz eines Ladestroms bestimmt, und dem Schalter (3) das Ansteuersignal zum Trennen der Last (2) von dem Transformator (17) bereitstellt, wenn die erste Frequenz bestimmt ist.

8. Verfahren zum Steuern einer Wandlervorrichtung (1) nach Anspruch 6 oder 7,
**dadurch gekennzeichnet,**
**dass** die Schaltersteuerschaltung (16) dem Schalter (3) ein weiteres Ansteuersignal bereitstellt, damit der Schalter (7) die Last (2) in einer batteriegestützten Lastbetriebsphase mit dem Transformator (17) verbindet.

9. Verfahren zum Steuern einer Wandlervorrichtung (1) nach Anspruch 8,
**dadurch gekennzeichnet,**
**dass** die Schaltersteuerschaltung (16) dem Schalter (7) das weitere Ansteuersignal bereitstellt, wenn eine zweite Frequenz bestimmt ist.

10. Verfahren zum Steuern einer Wandlervorrichtung (1) nach einem der Ansprüche 6 bis 9,
**dadurch gekennzeichnet,**
**dass** die zweite Frequenz höher als die erste Frequenz ist.

## Revendications

1. Dispositif convertisseur pour piloter une charge (2), le dispositif convertisseur comprenant
un circuit convertisseur incluant un transformateur (17),
un circuit de chargement de batterie configuré pour fournir un courant de chargement à un dispositif de stockage d'énergie (5) et
un commutateur (3) configuré pour déconnecter la charge (2) du transformateur (17),
dans lequel le transformateur (17) est configuré pour fournir une barrière d'isolation entre une alimentation secteur (6) et le dispositif de stockage d'énergie (5) et une barrière d'isolation supplémentaire entre le dispositif de stockage d'énergie (5) et la charge (2) et
**caractérisé en**
**ce que** le dispositif convertisseur est configuré pour fournir le courant de chargement à une première fréquence et pour fournir un courant de charge à une seconde fréquence différente de la première fréquence et
**en ce que** le dispositif convertisseur comprend un circuit de commande de commutateur (16) configuré pour fournir un signal de pilotage au commutateur (3) pour que le commutateur (3) déconnecte la charge (2) du transformateur (17) dans une phase de chargement de batterie.

2. Dispositif convertisseur selon la revendication 1,
**caractérisé en**
**ce que** le circuit de commande de commutateur (12) est configuré pour déterminer une fréquence d'un courant de chargement et pour fournir le signal de pilotage au commutateur (7) pour déconnecter la charge (2) du transformateur (3) lorsque la première fréquence est déterminée.

3. Dispositif convertisseur selon l'une des revendications 1 et 2, **caractérisé en**
**ce que** le circuit de commande de commutateur (16) est configuré pour fournir un signal de pilotage supplémentaire au commutateur (3) pour que le commutateur (3) connecte la charge (2) au transformateur (17) dans une phase de fonctionnement de charge soutenue par batterie.

4. Dispositif convertisseur selon la revendication 3,
**caractérisé en**
**ce que** le circuit de commande de commutateur (16) est configuré pour fournir le signal de pilotage supplémentaire au commutateur (3) lorsque la seconde fréquence est déterminée.

5. Dispositif convertisseur selon l'une quelconque des revendications 1 à 4,
**caractérisé en**
**ce que** la seconde fréquence est plus élevée que la première fréquence.

6. Procédé de commande d'un dispositif convertisseur (1) pour piloter une charge (2),
le dispositif convertisseur comprenant un circuit convertisseur incluant un transformateur (17), un circuit de chargement de batterie pour fournir un courant de chargement à un dispositif de stockage d'énergie (5), un commutateur (3) configuré pour déconnecter la charge (2) du transformateur (17) et un circuit de commande de commutateur (16), dans lequel le transformateur (17) fournit une barrière d'isolation entre une alimentation secteur (6) et le dispositif de stockage d'énergie (5) et une barrière d'isolation supplémentaire entre le dispositif de stockage d'énergie (5) et la charge (2) et le procédé est
**caractérisé par**
la fourniture, par le dispositif convertisseur, du courant de chargement 'à une première fréquence,
la fourniture, par le dispositif convertisseur, d'un courant de charge à une seconde fréquence différente de la première fréquence et
la fourniture, par le circuit de commande de commutateur (16), d'un signal de pilotage au commutateur (3) pour que le commutateur (3) déconnecte la charge (2) du transformateur (17) dans une phase de chargement de batterie.

7. Procédé de commande d'un dispositif convertisseur (1) selon la revendication 6,
**caractérisé en**
**ce que** le circuit de commande de commutateur (16) détermine une fréquence d'un courant de chargement et fournit le signal de pilotage au commutateur (3) pour déconnecter la charge (2) du transformateur (17) lorsque la première fréquence est déterminée.

8. Procédé de commande d'un dispositif convertisseur (1) selon la revendication 6 ou 7,
**caractérisé en**
**ce que** le circuit de commande de commutateur (16) fournit un signal de pilotage supplémentaire au commutateur (3) pour que le commutateur (7) connecte la charge (2) au transformateur (17) dans une phase de fonctionnement de charge soutenue par batterie.

9. Procédé de commande d'un dispositif convertisseur (1) selon la revendication 8,
**caractérisé en**
**ce que** le circuit de commande de commutateur (16) fournit le signal de pilotage supplémentaire au commutateur (7) lorsqu'une seconde fréquence est déterminée.

10. Procédé de commande d'un dispositif convertisseur (1) selon l'une quelconque des revendications 6 à 9,
**caractérisé en**
**ce que** la seconde fréquence est plus élevée que la première fréquence.
